# EUROPEAN PATENT APPLICATION

(11) **EP 2 574 496 A1**
(43) Date of publication of application: **03.04.2013**
(21) Application number: 11007970.4
(22) Date of filing: 30.09.2011
(51) Int. Cl.: B60N 2/28

(54) **Seat, in particular child seat for a motor vehicle**

(71) Applicant: Graco Children's Products Inc., Atlanta, GA 30328 (US)
(72) Inventor: Kitchens, Andrew, Acworth, Georgia 30101 (US); Smudde, A. Bart, Cumming, Georgia 30040 (US); Praetorius, Rachel, Oakland, California 94618 (US); Desrosiers, Craig, Attleboro Falls, Massachusetts 02763 (US)
(74) Representative: Schmid, Nils T.F.

(57) **Abstract**

A seat for a motor vehicle for being removably attached to a vehicle seat firmly connected to the vehicle body comprises a base firmly connectable to the motor vehicle body, a seat shell optionally removable from the base, and an installation device with at least one coupling location for removably attaching the base at the motor vehicle body and/or for removably attaching the seat shell at the base, wherein the installation device comprises a locking seat and an engagement member assigned to the locking seat for the at least one coupling location, respectively, preferably for several, in particular for all coupling locations, wherein in a mounting position of the base and/or the seat shell the engagement member and the locking seat are in locking engagement with each other. The seat has an electronic monitoring device with an optical sensor for the at least one coupling location, preferably for each coupling location, which optical sensor verifies whether the engagement member and the assigned locking seat are in the operational locking engagement.

## Description

The invention relates to a seat, in particular a child seat, for a motor vehicle, the seat to be arranged on a car seat rigidly attached to the vehicle body and to be also rigidly attached to the vehicle body.

Vehicle drivers that intend to take children with them in the vehicle are advised to safely lodge the children in seat shells having a shape that is particularly adapted so that in case of an accident a departure of the child from the seat is avoided and thus the danger of injury is largely reduced.

It is known that seats especially adjusted for the safety needs of children can be rigidly and removably attached to the preinstalled motor vehicle seat. In this way, it is possible to quickly and simply modify a motor vehicle seat for a child and also to quickly unmount the child seat structure in order to liberate the motor vehicle seat for an adult person again. Nearly for every year of age of a child, respectively dimensioned seat shells are provided. Fixation mechanisms have been developed in order to rigidly couple the child seat to the motor vehicle body. A very common fixation system is the so-called "ISOFIX" system, standardised according to the norm ISO13216

In the last years, there is a tendency towards flexible seating systems and towards developing a standardised base of the child seat that is rigidly coupled to the motor vehicle body to which different sizes of seat shells can exchangeably be attached and removed. For this concept, it is necessary to provide a safe and reliable locking mechanism between the different types and sizes of seat shells and the base.

An example for a well proven locking mechanism to firmly connect the seat shell to the base is known from US 2011/0074194 A1. In this child seat concept, the base of the child seat is fixed to the motor vehicle seat by means of ISOFIX. The seat shell is fixed to the base at four coupling locations or locking positions. In the area of the seating surface two locking positions are provided by a pair of engagement members like movable rods at the side of the shell and a pair of locking seats assigned to the respective engagement member, which can be designed as brackets, for example with five latching holes for adjusting different inclinations of the seat shell with respect to the base. Two further locking positions are provided at the back support side of the seat, the locking seats of which are respectively shaped as a long slot, in which the respective engagement member, designed as an engagement rod, is continuously displaceable in order to guide the seat shell in a defined manner with respect to the base when changing the inclination of the seat shell with respect to the base. In this well proven child seat concept the vehicle driver or the person responsible for the secure coupling of the seat shell to the base and of the base to the motor vehicle body has to verify beyond doubt whether the seat shell is in fact in the defined locking position for a continuous load transmission between the seat shell and the base or whether one of the engagement rods is not in the intended locking seat. However, this is often not conclusive owing to the structural condition of the coupling locations that are often not accessible to visual inspection.

Other installation devices for attaching a seat base to a vehicle body or for attaching a detachable seat shell at a base are known as standardised or individual solutions and presented here for the sake of completeness by non-exhaustingly referring to US 6428099, US 2005/0264064; EP 1 761 142 A2 and EP 1 493 616 A2. No matter how the installation device is designed, most of the installation systems suffer from the disadvantage that the vehicle driver or the responsible person must ascertain that the seat is properly coupled to the vehicle body.

It is an object of the invention to overcome the disadvantages of the prior art, in particular to improve the known system for child seat fixations such that a faulty or incomplete installation of the seat, in particular a child seat at the vehicle body can be avoided.

This object is solved by the features of claim 1. Accordingly, a seat, in particular a child seat for a motor vehicle is provided that is to be coupled removably to the body of a vehicle. The seat according to the invention comprises a base that is removably attached to the body of the motor vehicle, a seat shell that is optionally removable from the base and preferably positionable in different inclinations relative to the base, and an installation device defining at least one coupling location for removably attaching the base to the motor vehicle body and/or for removably attaching the seat shell to the base. It shall be understood that an installation device with at least one coupling location can be provided for the fixation of the seat shell to the base and for the fixation of the base to the motor vehicle body as well as only for the fixation of the seat shell to the base. For the realisation of the installation device, commonly an engagement member and an associated locking seat is provided, wherein in a final mounting position of the base at the motor vehicle body and/or of the seat shell at the base, the respective engagement member and the respective associated locking seat are in firm engagement with each other. According to the invention, the installation device is fitted with an additional electronic monitoring device having an optical sensor for the at least one coupling location, preferably for several coupling locations or for each coupling location. The optical sensor verifies whether the engagement member and the associated locking seat is in the functionally firm predetermined engagement. If the predetermined firm engagement is present, the optical sensor can transmit a positive signal to a control unit and/or a display in order to indicate to the vehicle driver or to the responsible person that the vehicle seat, in particular the seat shell and/or the base are fixed according to specification. In this way, it is assured that the vehicle driver will not move the motor vehicle in case that a faulty mounting of the seat is present. In case of a faulty mounting a negative signal may be generated and displayed. An electronic control unit connected with the optical sensor can even be connected to the motor vehicle electronics so that starting the motor vehicle engine or generally operating the motor vehicle is made impossible or at least not possible without further ado or that an error message is shown on the display of the motor vehicle dashboard. Also simple signalling by means of a respective light signal may be provided by a red or green light, for example by an LED or via an acoustic warning signal. The display device may be automatically activated to show the mounting situation automatically only if the seat has just been mounted. Furthermore, an activation device like an operating button can be provided in particular at the seat, the activation device being actuated by the motor vehicle driver or a responsible person in order to make the mounting state visible via the display. Obviously the display device may be active continuously. However, for reasons of energy saving it is preferred to maintain the display device active only for a short while to gain certainty about the actual mounting position. For the electric power supply of the optical sensor and optionally for the display device as well as for the electronic monitoring circuitry a local power supply like a battery or an accumulator may be provided, which can be stored at the base or at the seat shell. The storage location is to be selected such that it is easily accessible for an operating person, in particular in the unmounted state.

With the arrangement of an electronic monitoring device according to the invention having at least one optical sensor the correct and safe mounting position of the seat, in particular the seat shell relative to the vehicle body, is verified. In this way, the vehicle driver can rely on a correct fitting of the seat to the vehicle. It became apparent that optical sensors are especially suitable for an installation device of the seat shell and/or the seat, because only little assembly space must be provided for the optical sensor and because highest monitoring reliability can be achieved since the required number of mechanic and hence delicate components is small. In a preferred embodiment of the invention, the optical sensor is a photointerrupter capable of reliably signalling a change in position of monitored components when a light beam generated by the sensor is interrupted or not. Preferably the optical sensor has a light emitting element and a light receiving element, wherein in particular the light emitting element as well as the light receiving element is fixed at an integrally formed support structure of the optical sensor. The support structure is often realised as an integrally formed plastic component and can be designed to realise electronic components by means of a printed circuit board structure. The optical sensor may have a connecting portion with several electric connections at its support structure, which connections are coupled to the light emitting element and to the light receiving element via an arrangement of electric lines. The light receiving element generates and sends a positive or negative signal to a display and/or a control unit like a microchip.

In a preferred embodiment of the invention, the optical sensor is capable to send out a focussed light beam like a laser beam in order to verify over a large distance the presence or the lack of a certain component like the engagement member. In particular in the case of an optical sensor with laser beam function, it can be advantageous to realise the electric power supply by an electric connection to the electric main power supply of the motor vehicle like the motor vehicle battery or the battery of an electric motor or the alternator. This is advantageous in particular if the optical sensor has an elevated energy consumption so that common small accumulators or small batteries will not suffice.

In a preferred embodiment of the invention the optical sensor has a preferably U-shaped support member that preferably has two diverging support arms. In a preferred embodiment of the invention, the support arms extend essentially parallel to each other, wherein one of the support arms holds a light emitting element and the other one a light receiving element. Between them the support arms delimit a free space that is at least partially crossed by the light passing from the light emitting element to the light receiving element. Furthermore, the optical sensor has a movably mounted light interrupter that, in a possible embodiment, may be a section of the engagement member or, in an alternative embodiment, may be a component of the optical sensor. The light interrupter is mounted such that it is displaceable, in particular pivotable, from a passive rest position to an active light interrupting position in which the light interrupter keeps the light beam of the light emitting element from reaching the light receiving element. In the one embodiment the light interrupter, being a movable part of the optical sensor, is arranged such with respect to the engagement member or the locking seat that when the engagement member and the locking seat come into their firm engagement the light interrupter is pushed into the light interrupting position.

In a further embodiment of the invention, a translational or rotational guide like a pivot joint is provided for the movable light interrupter, and is directly or indirectly fixed at the in particular stationary locking seat. Furthermore, the light interrupter can be preloaded by a spring such that in an unactuated operating condition it is brought automatically into the rest position so that a light interruption towards the light receiving element is not present.

In a preferred embodiment of the invention, in particular the locking seat, stationary with respect to the vehicle body and preferably having a bracket in particular fixed to its base, defines several latching positions. One pair of locking seats each having several latching positions may be provided in the area of the seating surface of the seat according to the invention. The several latching positions serve the purpose of fixating the seat shell in different angles of inclination relative to the base in order to provide different seating positions for the passenger. Each of the several latching positions can be occupied in a locking manner by the respective, in particular movable, engagement member. The engagement members can for example be removed from the latched position by means of, for example, a pull-release cable in order to move the seat shell relatively to the base into the next or second next latching position. Upon release of the manual actuation device for the engagement member the preloaded engagement members latch into the respective latching positions of the locking seat. The light interrupter of the optical sensor is preferably dimensioned such that it is actuated by the movable engagement member in particular in each of the latching positions so that the light beam of the light emitting element is interrupted and a positive mounted signal can be outputted. In this way, it is assured that with a single component of the optical sensor it can be always detected whether a firm locking engagement is present between the engagement member and the locking seat or not, independent from the currently adjusted angle of inclination for the seat shell.

In a preferred embodiment of the invention the several latching positions are disposed such that they are arranged in a straight line-up, by means of which a straight alignment direction can be defined. The light beam generated by the optical sensor is directed such that it is directed essentially parallel to the straight arrangement of the latching positions or to the alignment direction. Additionally, the engagement member may be dimensioned such, in particular with respect to its length, that the light beam generated by the optical sensor is interrupted by the engagement member in its functionally firm engagement with the locking seat.

In a further developement of the invention, each optical sensor generates an occupied or mounted signal in the case that the engagement member and the locking seat are in the functionally firm engagement, and generates an error signal in the case that the engagement member and the locking seat are not in the functionally firm engagement. At least the optical sensor is designed to transmit such signals. Preferably the sensor transmits a respective signal to a signal processing unit and/or to a display unit.

In a preferred embodiment of the invention, the display is visibly disposed at the lateral outer wall of the base. The display can be realised visually, for example by means of an LED, or acoustically by means of a warning tone.

Further characteristics, advantages and features of the invention will become apparent in the following description of preferred embodiments of the invention in conjunction with the accompanying drawings showing in
- Figure 1: a perspective view of a seat according to the invention;
- Figure 2: a perspective view of the mechanism of an installation device for fixing a base of the seat to its seat shell according to the invention;
- Figure 3: a perspective view of a part of the installation device according to the invention as in figure 2 with an optical sensor in a first signal position;
- Figure 4: another perspective view of the part according to figure 3, wherein the optical sensor is disposed in a second signal position;
- Figure 5: a lateral view of the embodiment as in figures 3 and 4 in the first signal position;
- Figure 6: a lateral view of the embodiment according to figure 5 in the second signal position;
- Figure 7: a perspective view of a part of the installation device in a further embodiment of an optical sensor being disposed in a first signal position; and
- Figure 8: a schematic view of a further alternative embodiment of an optical sensor shown in the respective first signal position.

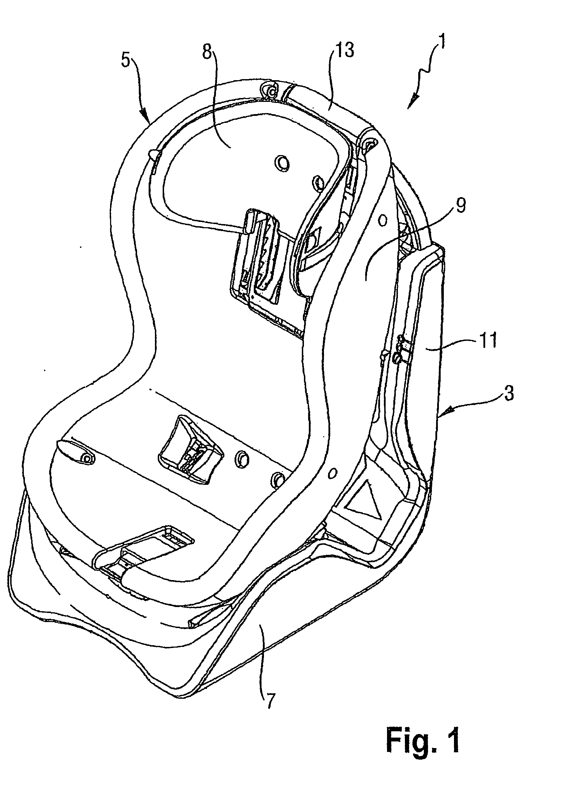

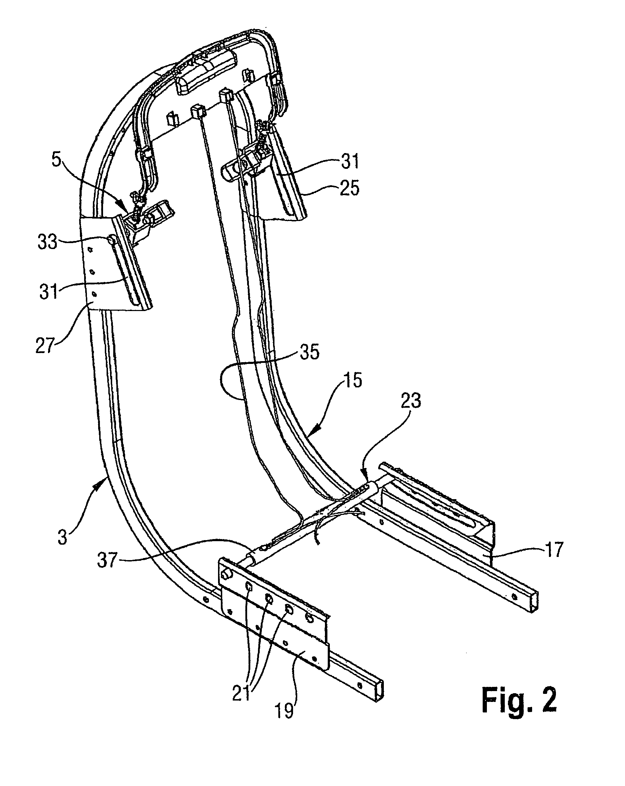

Figures 1 and 2 show, the basic components of a seat according to the invention as well as its frame structure and the fixation mechanism between a seat shell and a base. The seat 1 according to the invention has as main, essential components a base 3 facing the vehicle body and a seat shell 5 stepwise adjustable with respect to the base 3 in several inclination positions, which seat shell may be provided with a seat pad. The detailed structure of the seat shell and the base is described in US 2011/0074194 A1, which is explicitly referred to here.

The base 3 has laterally protruding wall sections 7, 11 respectively adjacent to the seating surface and to the back rest. The seat shell 5 has laterally protruding support sections 9 and a neck support 13, parallel to which a headrest 8 can be pushed upwards and downwards.

In figure 2 the rigid frame 15 of the base 3 is shown without the base cover. The frame 15 is designed as a bracket and extends from a horizontal section close to the seating area to vertical leg sections close to the back rest that are connected to each other by a bracket bow.

A pair of brackets 17, 19 are fixed to the frame 15 symmetrically and adjacent to the seating surface, which brackets respectively are part of the installation device for fixing the seat shell 5 at the base 3. The brackets 17, 19 each have five latching holes 21, of which a pair of opposing holes can be occupied by a telescopically movable latching rod 23. Also at the vertical section of the frame 15 a pair of brackets 25, 27 is disposed, having a straight, closed guiding slot 31, in which another movable engagement rod 33 can slide. The seat shell 5 is coupled to the engagement rod 23, 33 arrangement. In order to modify the inclination of the seat shell 5 with respect to the base 7, an actuation lever (not represented) is actuated by an operating person, whereby a pull-release cable 35 is pulled tight, pulling the lower latching rod 23 telescopically into the middle tube 37, whereby the latching position 21 is disengaged. In this disengagement position the operating person can modify the inclination of the seat shell 5, guided by the linear slot 31. In the adjacent latching holes 21 the seat shell can be stepwise fixated with respect to the base by means of the spring-loaded latching rods latching into the opposing latching holes. 21 through release of the operating lever.

In order to attach different seat shell types at the standard base 3, both pairs of latching rods 23, 33 are actuated, so that they release all of the brackets 17, 19, 25, 27. Subsequently, the desired seat shell 5 having the same latching arrangement is put onto the base 3, and the engagement rods 23, 33 enter pairwise the respective latching holes 21, respectively the linear slot 31.

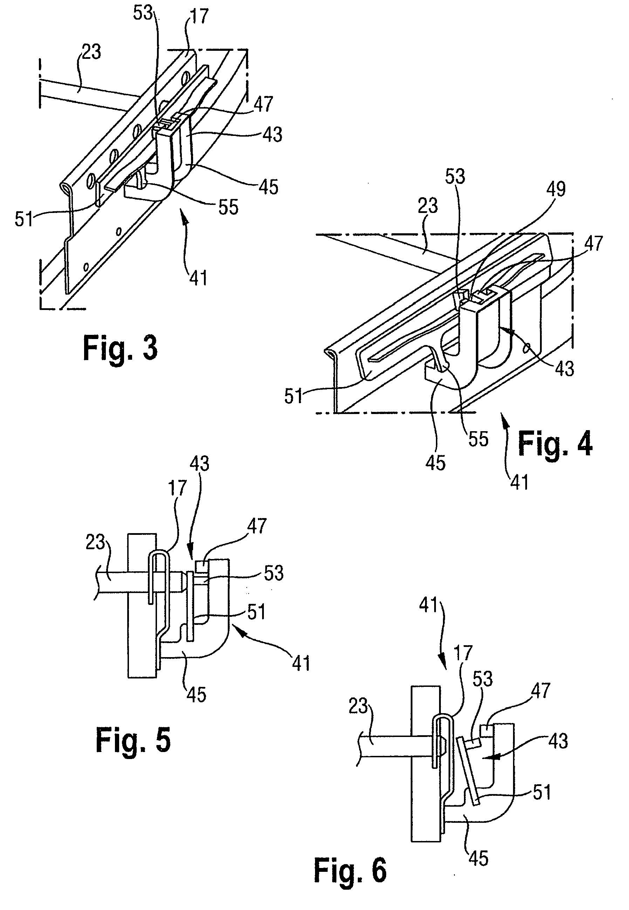

For the vehicle driver to be assured that the seat shell 5 is correctly fixed to the base 3, an electronic monitoring device 41 is provided, the first embodiment of which is shown in figures 3 to 5. The electronic monitoring device 41 comprises an optical sensor 43 fixed to the respective bracket 17.

The optical sensor 43 has an L-shaped basic support structure 45 to which a U-shaped electronic component 47 is attached. At the electronic component 47 a light receiving element (not shown in detail) and a light emitting element (not shown in detail) are provided, which are disposed opposite to each other. The opposing U-legs of the electronic component 47 define a free space 49 that can be occupied or cleared by a section 53 of a pivotably mounted light interrupter 51.

In figure 3 the light interrupter 51 is shown in a light interrupting position (mounted position) in which the centrally disposed section 53 extends as a protrusion into the space 49 between the U-legs of the electronic component 47. There the protrusion 53 enters the light beam between the light receiving and the light emitting element so that the light beam is interrupted. This is communicated by the optical sensor 43 to a not-represented control device which causes a positive signal (mounted signal) to be outputted intended to communicate to the operating person that the seat shell 5 is situated in a correct locking position relative the base 3. As evident from figure 3, the latching rod 23 buts against a side of a light interrupter 51 facing away from the optical sensor 43 so that the protrusion 53 is pushed between the U-legs of the electronic component 47 thus interrupting the light beam.

The light interrupter 51 is preloaded by a spring (not represented) pushing the light interrupter 51 into a pivoted-out rest position shown in figure 4. The light interrupter 51 is pivotably mounted at a swivel joint 55 at the L-shaped basic support structure 45 at the optical sensor 43, wherein the pivot axis extends essentially parallel to the longitudinal extension of the light interrupter 51. In the rest position, the protrusion 53 is outside the space 49 between the U-legs of the electronic component 47, whereby the light beam can reach unimpeded the light receiving element of the electronic component 47. In this operating condition, the optical sensor 43 outputs an error signal to indicate to the operating person that the seat shell is not locked with respect to the base 7. The functionality of the light interrupter 51 is made clear by comparing figures 5 and 6, which respectively show the rest position and the light interrupting function. Therein, the protrusion 53 acts as a face plate capable of interrupting the light beam and thus switching the light receiving element.

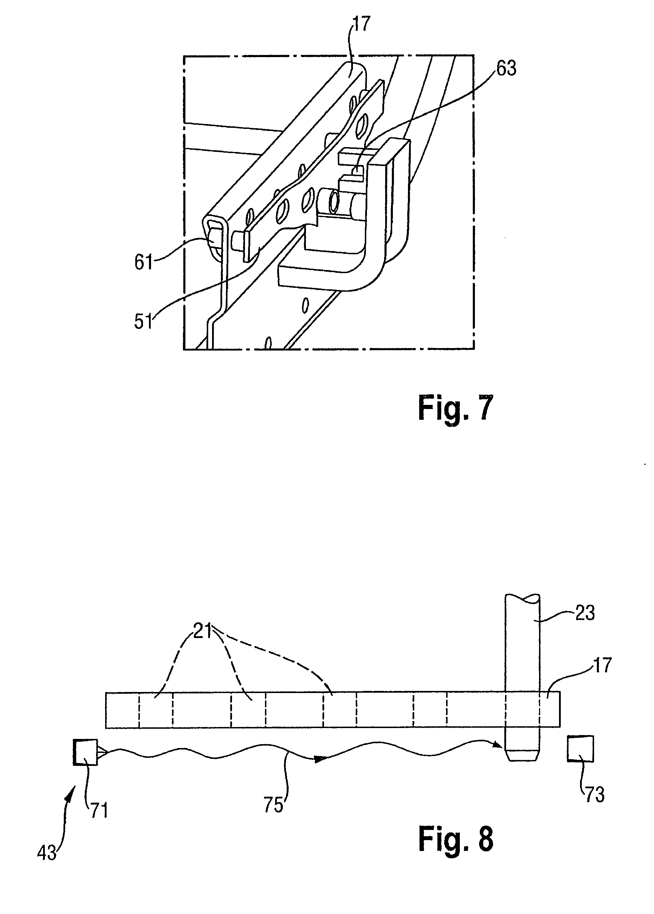

The mechanism of the optical sensor 43 according to the embodiment shown in figure 7 differs from the one described above in that the light interrupter 51 is translationally guided with respect to the bracket 17, the light interrupter 51 having two guide pegs 61 at its extremities slidably guided in guiding holes in the bracket 17 designed with a transition fit. The light interrupter 51 is spring-loaded such that in an unactuated state it is pushed towards the bracket 17 whereby the space 63 between U-legs is cleared.

Another preferred embodiment of the optical sensor 43 is indicated in figure 8. The optical sensor 43 has a laser beam emitting element 71 and a laser beam receiving element 73. The laser emitting element 71 is arranged such that a laser beam 75 is aligned essentially in parallel with the longitudinal extension of the bracket 17. In addition, the laser beam 75 runs along an imaginary line of the arrangement of the latching holes 21. Once the latching rod 23 is functionally received in the latching position 21, as shown in figure 8, the laser beam 75 is interrupted by the end of the latching rod 23. The light receiving element 73 can generate a positive signal for a functionally firm engagement between the latching rod 23 and the bracket 17. If the laser beam receiving element 73 receives at least laser beam components, a faulty arrangement of the seat shell 5 with respect to the base 3 is to be assumed.

It shall be understood that in the above described embodiment only an installation device and monitoring device for monitoring the correct fixation of the seat shell 5 with respect to the base 3 is described. It shall be understood that a corresponding electronic monitoring device can also be used at a coupling location where the base 3 is in firm, locking engagement with a component of the vehicle body (not represented).

The features disclosed in the above description, the figures and the claims may be relevant for the realisation of the invention in its different embodiment individually as well as in any combination.

### List of reference numerals

- 1: seat
- 3: seat base
- 5: seat shell
- 7, 11: wall sections
- 8: headrest
- 9: support section
- 13: neck support
- 15: frame
- 17, 19, 25, 27: brackets
- 21: latching holes
- 23, 33: latching rod
- 31: linear slot
- 35: pull-release cable
- 37: middle tube
- 41: electronic monitoring device
- 43: optical sensor
- 45: L-shaped support
- 47: U-leg
- 49, 63: free space
- 51: light interrupter
- 53: section
- 55: swivel joint
- 61: guide peg
- 71: laser emitting element
- 73: laser receiving element
- 75: laser beam

## Claims

1. Seat for a motor vehicle for being removably attached to a vehicle seat firmly connected to the vehicle body, comprising:
- a base (3) firmly connectable to the motor vehicle body
- a seat shell (5) optionally removable from the base (3), and
- an installation device with at least one coupling location for removably attaching the base (3) at the motor vehicle body and/or for removably attaching the seat shell (5) at the base (3),
wherein the installation device comprises a locking seat and an engagement member assigned to the locking seat for the at least one coupling location, respectively, preferably for several, in particular for all coupling locations, wherein in a mounting position of the base (3) and/or the seat shell the engagement member and the locking seat are in locking engagement with each other, **characterised by** an electronic monitoring device having an optical sensor (43) for the at least one coupling location, preferably for each coupling location, which optical sensor (43) verifies whether the engagement member and the assigned locking seat are in the operational locking engagement.

2. Seat according to claim 1, **characterised in that** the optical sensor (43) is a photointerrupter.

3. Seat according to claim 1 or 2, **characterised in that** the optical sensor (43) has a light emitting element and a light receiving element, wherein in particular the light emitting element and the light receiving element are attached to a support structure and/or the optical sensor (43) has an electrical connector with several connections coupled to the light emitting element and to the light receiving element via an arrangement of electric lines.

4. Seat according to one of the preceding claims, **characterised in that** the optical sensor (43) has a light emitting element and a light receiving element, wherein in particular the light emitting element is designed to direct a laser beam towards to the light receiving element.

5. Seat according to one of the preceding claims, **characterised in that** the optical sensor (43) comprises an in particular U-shaped support having two support arms, one of which holds the light emitting element and the other one holds the light receiving element, and both of which delimit between them a free space that is at least partially crossed by the light passing from the light emitting element to the light receiving element, and a movably mounted light interrupter (51) that can be displaced, in particular pivoted, from a passive rest position to an active light interrupting position, wherein in particular the light interrupter (51) is arranged with respect to the engagement member such that, when the engagement member and the locking seat come into the locking engagement the light interrupter (51) is pushed into the light interrupting position.

6. Seat according to claim 5, **characterised in that** a translational or rotational guide like a pivot joint (55) is provided for the light interrupter (51) and is directly or indirectly fixed at the in particular stationary locking seat.

7. Seat according to claim 5 or 6, **characterised in that** the light interrupter (51) is preloaded by a spring such that it is automatically brought into the rest position without actuation.

8. Seat according to one of the preceding claim, **characterised in that** the in particular stationary locking seat defines several latching positions by a bracket fixed in particular at its base, which latching positions can be lockingly occupied by the in particular movable engagement member, wherein the light interrupter (51) is dimensioned such that it is actuated by the movable engagement member in each of its latching positions in order to be brought into the light interrupting position.

9. Seat according to one of the preceding claims, **characterised in that** the in particular stationary locking seat defines several latching positions, preferably by a bracket in particular fixed at its base, which latching positions are adjacent to each other and aligned in a row and can respectively individually be occupied by the in particular movable engagement member, wherein a light beam generated by the optical sensor (43) is essentially directed parallel to the straight alignment direction of the latching positions, and/or the engagement member is dimensioned such that the light beam generated by the optical sensor (43) is interrupted by the engagement member in its functional engagement.

10. Seat according to one of the preceding claims, **characterised in that** each optical sensor (43) outputs an occupying signal in particular via a signal processing unit in case that the engagement member and the locking seat are in the functional engagement, outputs an error signal in case that the engagement member and the locking seat are not in the functional engagement, and preferably transmits the signal to at least one display, wherein in particular one display is respectively arranged visibly at a lateral outer wall of the base and/or the at least one display comprises an LED and an acoustic warning unit.

## Amended claims

### Amended claims in accordance with Rule 137(2) EPC.

**1.** Seat for a motor vehicle for being removably attached to a vehicle seat firmly connected to the vehicle body, comprising:
- a base (3) firmly connectable to the motor vehicle body
- a seat shell (5) optionally removable from the base (3),
- an installation device with at least one coupling location for removably attaching the base (3) at the motor vehicle body and/or for removably attaching the seat shell (5) at the base (3),
wherein the installation device comprises a locking seat and an movable engagement member assigned to the locking seat for the at least one coupling location, respectively, wherein in a mounting position of the base (3) and/or the seat shell the engagement member and the locking seat are in locking engagement with each other, and
- an electronic monitoring device having an optical sensor (43) for the at least one coupling location, which optical sensor (43) comprises a light interrupter and verifies whether the engagement member and the assigned locking seat are in the operational locking engagement, **characterised in that** the locking seat defines several latching positions by a bracket, which latching positions can be lockingly occupied by the movable engagement member, wherein the light interrupter (51) is dimensioned such that it is actuated by the movable engagement member in each of its latching positions in order to be brought into a light interrupting position.

**2.** Seat according to claim 1, **characterised in that** the optical sensor (43) is a photointerrupter.

**3.** Seat according to claim 1 or 2, **characterised in that** the optical sensor (43) has a light emitting element and a light receiving element, wherein in particular the light emitting element and the light receiving element are attached to a support structure and/or the optical sensor (43) has an electrical connector with several connections coupled to the light emitting element and to the light receiving element via an arrangement of electric lines.

**4.** Seat according to one of the preceding claims, **characterised in that** the optical sensor (43) has a light emitting element and a light receiving element, wherein in particular the light emitting element is designed to direct a laser beam towards to the light receiving element.

**5.** Seat according to one of the preceding claims, **characterised in that** the optical sensor (43) comprises an in particular U-shaped support having two support arms, one of which holds the light emitting element and the other one holds the light receiving element, and both of which delimit between them a free space that is at least partially crossed by the light passing from the light emitting element to the light receiving element, and **in that** the light interrupter (51) is movably mounted and can be displaced, in particular pivoted, from a passive rest position to an active light interrupting position, wherein in particular the light interrupter (51) is arranged with respect to the engagement member such that, when the engagement member and the locking seat come into the locking engagement the light interrupter (51) is pushed into the light interrupting position.

**6.** Seat according to claim 5, **characterised in that** a translational or rotational guide like a pivot joint (55) is provided for the light interrupter (51) and is directly or indirectly fixed at the in particular stationary locking seat.

**7.** Seat according to claim 5 or 6, **characterised in that** the light interrupter (51) is preloaded by a spring such that it is automatically brought into the rest position without actuation.

**8.** Seat according to one of the preceding claim, **characterised in that** the locking seat is stationary and/or the bracket is fixed at the base of the seat.

**9.** Seat according to one of the preceding claims, **characterised in that** the in particular stationary locking seat defines several latching positions, preferably by a bracket in particular fixed at its base, which latching positions are adjacent to each other and aligned in a row and can respectively individually be occupied by the in particular movable engagement member, wherein a light beam generated by the optical sensor (43) is essentially directed parallel to the straight alignment direction of the latching positions, and/or the engagement member is dimensioned such that the light beam generated by the optical sensor (43) is interrupted by the engagement member in its functional engagement.

**10.** Seat according to one of the preceding claims, **characterised in that** each optical sensor (43) outputs an occupying signal in particular via a signal processing unit in case that the engagement member and the locking seat are in the functional engagement, outputs an error signal in case that the engagement member and the locking seat are not in the functional engagement, and preferably transmits the signal to at least one display, wherein in particular one display is respectively arranged visibly at a lateral outer wall of the base and/or the at least one display comprises an LED and an acoustic warning unit.
